# EUROPÄISCHE PATENTSCHRIFT

(11) **EP 2 044 270 B1**
(45) Veröffentlichungstag und Bekanntmachung des Hinweises auf die Patenterteilung: **07.10.2009**
(21) Anmeldenummer: 07785855.3
(22) Anmeldetag: 27.06.2007
(51) Int. Cl.: E04D 3/36, E04F 13/08

(54) **BEFESTIGUNGSSYSTEME UND VERFAHREN ZUR MONTAGE VON DÄMMSTOFFPLATTEN**
FASTENING SYSTEMS AND METHOD FOR FITTING INSULATING PANELS
SYSTÈME DE FIXATION ET PROCÉDÉ DE MONTAGE DE PLAQUES DE MATÉRIAU D'ISOLATION

(30) Priorität: 13.07.2006 DE 102006032445
(43) Veröffentlichungstag der Anmeldung: 08.04.2009
(73) Patentinhaber: EJOT Baubefestigungen GmbH, D-57334 Bad Laasphe (DE)
(72) Erfinder: DRATSCHMIDT, Frank, 57319 Bad Berleburg (DE); KNEBEL, Ulrich, 57319 Bad Berleburg-Berghausen (DE); HACKLER, Erhard, 57319 Bad Berleburg (DE); WIED, Werner, 57319 Bad Berleburg (DE)
(74) Vertreter: Heselberger, Johannes
(86) Internationale Anmeldenummer: PCT/EP2007/005676
(87) Internationale Veröffentlichungsnummer: WO 2008/006465

(56) Entgegenhaltungen:
- EP-A- 0 189 569
- EP-A- 1 182 361
- EP-A- 1 318 250
- DE-A1- 2 437 308
- DE-A1- 3 318 800
- DE-A1- 10 213 490
- DE-A1- 19 505 841
- DE-A1- 19 745 296
- DE-U1- 29 517 042
- GB-A- 2 091 368

## Beschreibung

Die vorliegende Erfindung betrifft Befestigungssysteme und Verfahren zur Montage von Dämmstoffplatten an einer Unterkonstruktion, wobei die Befestigungssysteme aus einem Spreizelement mit einem Spreizelementkopf und einem Spreizelementschaft sowie einem Dübel mit einem Druckteller und einem daran anschließenden Dübelschaft bestehen.

Herkömmliche Dübel, welche zur Montage von Dämmstoffplatten beispielsweise an einem Mauerwerk verwendet werden, liegen in der Regel nach der wegbegrenzten Montage des Spreizelements mit ihrem Tellerelement auf der Dämmung auf, müssen jedoch für nachfolgende Arbeitsgänge, wie beispielsweise dem Verputzen, bündig mit der Dämmstoffoberfläche abschließen. Erst damit ist ein gewünschter gleichmäßig dicker Auftrag von Unter- oder Deckputz möglich.

Aus der EP 1 298 330 A2 ist ein Befestigungselement für Dämmstoffplatten bekannt, welches sowohl eine hohe Knicksteifigkeit des Dübelkörpers als auch des Spreizelements gewährleistet. Auf diese Weise soll das Befestigungselement auch in einem mit Bohrklein versehenen Bohrloch hohe Lastwerte sicherstellen. Allerdings kann es bei diesem Befestigungselement trotz der ausgeprägten Knicksteifigkeit zu einem Bruch des Spreizelements kommen, wenn nach dem Setzen des Befestigungselements weiter auf dieses eingeschlagen wird, um eine flächenbündige Montage mit dem Dämmstoff zu erreichen. Zudem kann es auch zu einem unerwünschten Rutschen der Spreizzone im Verankerungsgrund kommen.

Des Weiteren ist aus der EP 1 457 688 A1 ein Spreizdübel bekannt, welcher eine axiale Stauchzone aufweist, die sich während der Montage des Dübels weder radial ausbaucht noch Öffnungen aufweist, um einerseits Hohlräume im Dämmstoff zu vermeiden und um andererseits die Bildung von Kondenswasser im Bereich der Öffnungen zu verhindern. Auch bei diesem Dübel kann es durch eine hohe Axiallast zu einem Brechen oder aber einem Verbiegen des Spreizelements kommen.

Die EP 1 182 361 A2 beschreibt ein Befestigungssystem für Bauteile an einer Wand mit einem in eine Bohrung der Wand einsetzbaren Dübelteil aus Kunststoff. Dieser weist einen Hülsenschaft auf, der zu seinem vorderen Einsatzende hin aufspreizbar ist, und einen davon unabhängigen Hülsenteil aus Kunststoff mit an seinem hinteren Schaftende ausgeformten tellerförmigen Halteelement, sowie einen als Spreizelement für den Dübelteil vorgesehenen Stift, Schraube oder dergleichen, der im Hülsenteil versenkbar ist, wobei sich der Kopf dieses Spreizelementes auf Höhe des Haltetellers befindet, und wobei der Hülsenteil an den Dübelteil derart angepasst ist, dass der Hülsenteil mit Halteelement gegenüber dem Dübelteil teleskopartig verschiebbar ist. Dabei ist das Befestigungssystem unter Verformung des tellerförmigen Halteelementes gegenüber dem Bauteil verspannbar. Außerdem weist der Dübelteil an seinem hinteren Endbereich eine äußere Abstützschulter als Zusammenhaltsicherung des Dübelteils mit dem Hülsenteil beim Einführen des Spreizkörpers auf.

Aus der EP 1 318 250 A3 ist schließlich ein Dübel zum Anbringen von Dämmstoffplatten bekannt, der komplett in der Dämmstoffplatte versenkt werden kann. Dies geschieht mittels spezieller Schneidvorrichtungen, die am äußeren Rand des Drucktellers angeordnet sind und beim Eintreiben des Dübels in den Dämmstoff einschneiden. Mittels der von der Eintreibvorrichtung auf das Spreizelement übertragenen Kraft, wird das Dämmstoffmaterial gleichzeitig mit dem Einschneiden von dem Druckteller komprimiert, wobei der Druckteller entlang des Dübelschafts gleitet, so dass der Dübel vertieft in der Dämmstoffplatte angebracht wird. Anschließend wird eine Abdeckung aus Dämmstoffmaterial in die entstandene Vertiefung eingesetzt, die bündig mit der Oberfläche der Dämmstoffplatte abschließt.

Um einen Dämmstoffhalteteller bündig in die Dämmstoffoberfläche einzuziehen, ist es erforderlich, eine axiale Stauchung im Dübelschaft unter der Dämmung zu ermöglichen. Hierzu muss eine bestimmte axiale Last aufgebracht werden. Aus Gründen der notwendigen Verankerung im tragenden Untergrund, etwa dem Mauerwerk, darf dabei kein Axialweg der Dübelspreizzone auftreten, mit anderen Worten, die Dübelhülse muss stehen bleiben. Um den Widerstand der Dübelhülse und der Dämmung gegen axiale Stauchung zu überwinden, kann diese Axiallast jedoch so groß werden, dass es zu einem Verbiegen oder Brechen des Spreizelements aber auch einem frühzeitigen Versagen der Spreizzone kommen kann.

Es ist somit die erfindungsgemäße Aufgabe einen Dübel zu schaffen, durch den die Axialkraft zur oberflächenbündigen oder vertieften Montage so weit reduziert bzw. aufgelöst wird, dass keine Beschädigungen wie beispielsweise ein Bruch des Spreiznagels, ein Verbiegen des Spreiznagels oder ein Abscheren des Muttergewindes in der Spreizzone, auftreten und bei dem sich die Dübelhülse während der Montage nicht im Bohrloch verschiebt.

Diese Aufgabe wird erfindungsgemäß gelöst durch ein Befestigungssystem, welches aus einem Spreizelement und einem Dübel besteht und bei dem an dem in Einführrichtung unteren Ende des Spreizelementkopfs eine Schneidkante zum Durchtrennen der Verbindung zwischen dem Druckteller und dem Dübelschaft derart angeordnet ist, dass beim vollständigen Einbringen des Spreizelements (3) in den Dübelschaft (8) die Verbindung zwischen dem Druckteller (7) und dem Dübelschaft (8) durchtrennt wird, sowie durch ein Verfahren bei dem a) ein Bohrloch durch die Dämmstoffplatte in die Unterkonstruktion gebohrt wird, b) der Dübel und das Spreizelement in das Bohrloch eingesetzt werden, c) das Spreizelement in den Druckteller und den Dübelschaft eingetrieben wird, wobei d) die Verbindung zwischen dem Druckteller und dem Dübelschaft mittels einer am in Einführrichtung unteren Ende des Spreizelementkopfs angeordneten Schneidkante durchtrennt wird, wobei e) in der Endmontageposition der Druckteller und der Spreizelementkopf bündig mit der Dämmstoffoberfläche abschließen. Diese Schritte können, müssen aber nicht in der genannten Reihenfolge ausgeführt werden. Die Aufgabe wird weiterhin gelöst durch ein alternatives Befestigungssystem bei dem an dem Dübelschaft ein erstes und ein zweites Rastelement angeordnet sind, die mit einer korrespondierenden Rastvorrichtung am unteren Ende des Drucktellers dergestalt zusammenwirken, dass der Dübelschaft so in den Druckteller eingesetzt werden kann, dass die am in Einführrichtung unteren Ende des Drucktellers angeordnete Rastvorrichtung zwischen den ersten und zweiten Rastelementen des Dübelschafts einrastet und derart ausgebildet sind, dass beim Einbringen des Befestigungssystems die Rastverbindung aufgehoben wird, wenn eine bestimmte Grenzkraft überschritten wird, und durch ein alternatives Verfahren, bei dem (a) ein Bohrloch durch die Dämmstoffplatte in die Unterkonstruktion gebohrt wird, (b) der Dübel und das Spreizelement in das Bohrloch eingesetzt werden, (c) das Spreizelement in den Druckteller und den Dübelschaft eingetrieben wird, wobei (d) eine am Druckteller und zwischen ersten und zweiten Rastelementen am Dübelschaft angeordnete Rastvorrichtung leicht nach außen bewegt wird, so dass sie über die zweiten Rastelemente am Dübelschaft gleiten kann, wobei (e) in der Endmontageposition der Druckteller und der Spreizelementkopf bündig mit der Dämmstoffoberfläche abschließen. Die beschriebenen Schritte können, müssen aber nicht in der genannten Reihenfolge ausgeführt werden.

In einer bevorzugten Ausführungsform der Erfindung ist die Schneidkante in ihrem Umfang ununterbrochen ausgebildet. Sie kann allerdings auch unterbrochen ausgebildet sein. Dies ist jeweils abhängig von der Art und dem Material der zwischen Druckteller und Dübelschaft vorgesehenen Verbindung bzw. Sollbruchstelle. Handelt es sich beispielsweise um mehrere voneinander getrennte Stege aus Kunststoff, wird eine ununterbrochene Schneidkante in der Regel bevorzugt. Handelt es sich bei der Verbindung etwa um flexible Strukturen, kann es unter Umständen zweckmäßiger sein, eine unterbrochene Schneidkante zu wählen. Vorzugsweise sind der Druckteller und der Dübelschaft über Sollbruchstellen miteinander verbunden. Diese werden beim Erreichen einer vorbestimmten Einschlagkraft durch die Schneidkante durchtrennt.

Bevorzugt ist der Druckteller axial entlang des Dübelschafts verschiebbar. Nach dem Durchtrennen der Verbindung zwischen dem Druckteller und dem Dübelschaft soll der Druckteller, ggf. nach wiederholtem Schlagen mit dem Hammer, ein Stück weit entlang des Dübelschafts gleiten, damit er gerade soweit in den Dämmstoff eindringt, dass seine Oberseite mit der Dämmstoffoberfläche fluchtet

Vorzugsweise weist der Spreizelementkopf an seinem in Einführrichtung oberen Ende einen Vorsprung auf. Dieser Vorsprung wird beim Einschlagen des Spreizelements von einer korrespondierenden Ausnehmung aufgenommen, welche im Druckteller vorgesehen ist. Auf diese Weise kann die auf das Spreizelement aufgebrachte Kraft auf den Druckteller übertragen werden.

In einer weiteren bevorzugten Ausführungsform der Erfindung weist der Dübelschaft eine Spreizzone auf. Die Spreizzone weitet sich beim Einschlagen des Dübels im Mauerwerk auf, so dass eine sichere Verankerung des Dübels in der Wand gewährleistet werden kann.

Vorzugsweise schließen der Druckteller und der Spreizelementkopf in der Endmontageposition bündig mit der Dämmstoffoberfläche ab. Auf diese Weise wird eine für nachfolgende Arbeitsgänge optimale Voraussetzung geschaffen.

Es wird des Weiteren bevorzugt, dass der Dübelschaft nach dem Durchtrennen der Verbindung zwischen ihm und dem Druckteller von einer Aussparung zwischen der Schneidkante und dem Spreizelementschaft aufgenommen wird. Hierdurch wird sichergestellt, dass der Druckteller nicht so tief in die Dämmstoffplatte eingeschlagen werden kann, dass seine Oberfläche nicht mehr bündig mit der Dämmstoffplattenoberfläche abschließen würde.

Vorzugsweise wird das Spreizelement als Spreiznagel ausgebildet. In einer anderen bevorzugten Ausführungsform wird das Spreizelement als Schraube ausgebildet.

In einer anderen bevorzugten Ausführungsform der Erfindung weist der Spreizelementkopf einen konischen Abschnitt auf. Hierdurch wird wiederum sichergestellt, dass der Druckteller nicht zu tief in die Dämmstoffplatte eingeschlagen werden kann.

Anhand der beigefügten Zeichnungen wird die Montage von erfindungsgemäßen Dübeln mittels der erfindungsgemäßen Verfahren dargestellt. Es zeigen:
- Fig. 1: eine teilweise Querschnittsansicht eines erfindungsgemäßen Befes- tigungssystems;
- Fig. 2: eine Querschnittsansicht eines durch die Dämmstoffplatte hindurch in das Mauerwerk eingesteckten Befestigungssystems im Vormon- tagezustand;
- Fig.3: eine vergrößerte Querschnittsansicht des Drucktellers und des Spreizelementkopfs unmittelbar vor der Endmontage;
- Fig. 4: eine vergrößerte Querschnittsansicht des Drucktellers und des Spreizelementkopfs im Endmontagezustand;
- Fig. 5: eine perspektivische Ansicht eines Spreizelementkopfs mit unun- terbrochener Schneidkante;
- Fig. 6: eine perspektivische Ansicht eines Spreizelementkopfs mit unter- brochener Schneidkante;
- Fig.7: eine Querschnittsansicht eines alternativen erfindungsgemäßen Dübels im auseinander genommenen Zustand;
- Fig. 8: eine Querschnittsansicht des alternativen erfindungsgemäßen Befestigungssystems;
- Fig. 9: eine vergrößerte Querschnittsansicht der Rastelemente am Dübel- schaft und der Rastvorrichtung am Druckteller des alternativen er- findungsgemäßen Dübels;
- Fig. 10: eine Querschnittsansicht des alternativen erfindungsgemäßen Be- festigungssystems im Endmontagezustand.
- Fig. 11: eine Querschnittsansicht eines bekannten Befestigungssystems, das in den Ansprüchen nicht erfaßt ist.

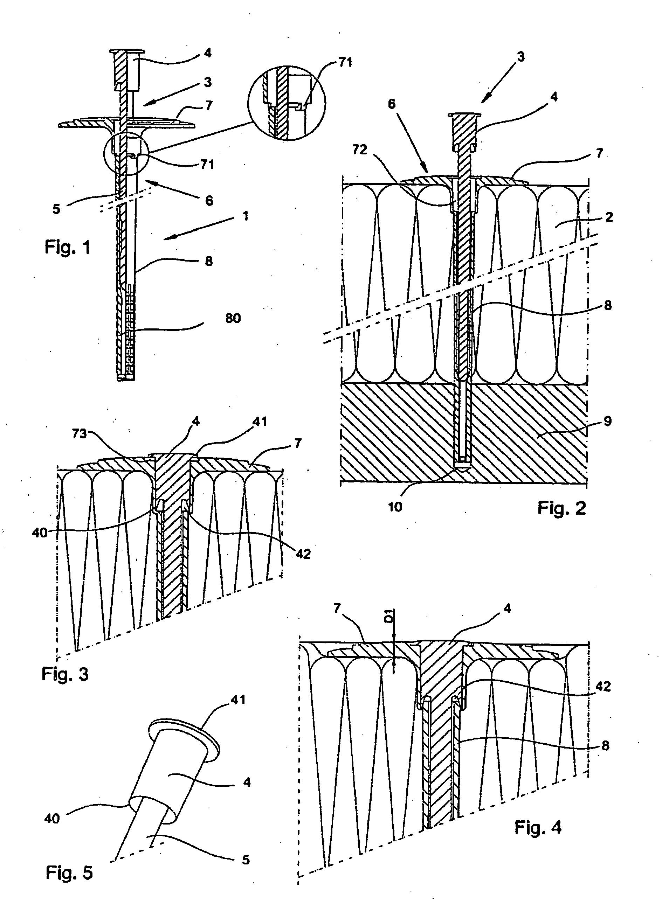

In Fig. 1 wird das erfindungsgemäße Befestigungssystem 1 mit dem Spreizelement 3 und dem Dübel 6 gezeigt. Das Spreizelement 3 weist einen Spreizelementkopf 4 und einen Spreizelementschaft 5 auf und kann als Spreiznagel oder als Schraube ausgebildet sein. Der Dübel 6 umfasst einen Druckteller 7 und einen Dübelschaft 8, wobei der Druckteller 7 und der Dübelschaft 8 etwa über Sollbruchstellen miteinander verbunden sind. Die Sollbruchstellen können dabei wie gezeigt als Stege 71 ausgebildet sein, es ist aber auch jede andere Form von Verbindung, sei sie reib-, kraft- oder formschlüssig, denkbar. Diese Verbindungen bzw. Sollbruchstellen sind dabei allerdings so ausgestaltet, dass sie bei einer bestimmten Axiallast bzw. Grenzkraft brechen, welche unbedenklich ist im Hinblick auf mögliche Beschädigungen des Spreizelements 3 oder des Dübels 6. Am unteren Ende des Dübelschafts 8 ist außerdem eine Spreizzone 80 angeordnet.

Ein Vormontagezustand des erfindungsgemäßen Befestigungssystems 1 wird in Fig. 2 dargestellt. Hierbei wurde der Dübel 6 in ein in die Dämmstoffplatte 2 und das Mauerwerk 9 gebohrtes Bohrloch 10 eingesetzt, so dass er mit der Unterseite des Drucktellers 7 auf der Oberfläche der Dämmstoffplatte 2 zum Aufliegen kommt. Der Druckteller weist eine Aufnahme 72 für den Spreizelementkopf 4 im eingeschlagenen Zustand auf. Das Spreizelement 3 ist zum größten Teil in die Dübelhülse 8 eingesteckt, aber noch nicht in die Spreizzone 80 des Dübelschafts 8 vorgedrungen, so dass noch keine Verankerung des erfindungsgemäßen Befestigungssystems 1 im Mauerwerk 9 zustande gekommen ist.

In Fig. 3 ist zu sehen, wie das Spreizelement 3 fast vollständig in den Dübel 6 eingetrieben worden ist. Am in Einführrichtung unteren Ende des Spreizelementkopfs 4 ist eine Schneidkante 40 angeordnet mittels derer die Verbindung zwischen dem Druckteller 7 und dem Dübelschaft 8, also etwa die Stege 71, beim vollständigen Einbringen des Spreizelements (3) in den Dübelschaft (8) durchtrennt werden soll bzw. sollen. Die Schneidkante 40 liegt auf einer Unterkante der Aufnahme 72 auf. Zwischen der Schneidkante 40 und dem Spreizelementschaft 5 ist eine Aussparung 42 gebildet, welche dazu dient, den Dübelschaft 8 aufzunehmen, wenn die Verbindung zwischen dem Druckteller und dem Dübelschaft von der Schneidkante 40 durchtrennt worden ist. Am in Einführrichtung oberen Ende des Spreizelementkopfs 4 ist ein Vorsprung 41 angeordnet, der mit einer Ausnehmung 73 im Druckteller 7 korrespondiert. Der Vorsprung 41 befindet sich aber noch etwas oberhalb der Oberkante des Drucktellers 7, da der Durchtrennvorgang noch nicht begonnen hat. In dem Moment, in welchem die Verbindung zwischen dem Druckteller 7 und dem Dübelschaft 8 durch die von einer Eindrehvorrichtung aufgebrachten Kraft oder einem Schlag mit einer geeigneten Einschlagvorrichtung von der Schneidkante 40 durchtrennt ist, kommt der Vorsprung 41 in der Ausnehmung 73 zum Anliegen, d.h. der Spreizelementkopf 4 ist dann vollständig in der Aufnahme 72 aufgenommen. Jetzt kann ggf. durch einen weiteren Schlag weitere Kraft von dem Spreizelementkopf 4 auf den Druckteller 7 übertragen werden, so dass dieser den unter sich liegenden Dämmstoff leicht komprimiert, und zwar dergestalt, dass der Spreizelementkopf 4 und der Druckteller 7 bündig mit der Oberfläche der Dämmstoffplatte 2 abschließen, wie in Fig. 4 zu sehen ist. Der nun von dem Druckteller 7 getrennte Dübelschaft 8 wird von der Ausnehmung 42 im Spreizelementkopf 4 aufgenommen. Die Ausnehmung 42 im Spreizelementkopf 4 ist dabei vorzugsweise so ausgebildet, dass die Strecke, die der Druckteller 7 axial über den Dübelschaft 8 gleitet, bevor er von der Dübelhülse 8 gestoppt wird, in etwa der Dicke D1 des Drucktellers 7 entspricht. Es sollte festgehalten werden, dass sich die Dübelhülse 8 im Bohrloch nicht mehr bewegt, denn die Spreizzone 80 ist bereits aufgespreizt und sorgt damit für eine dauerhafte Verankerung des Befestigungssystems 1 in der Unterkonstruktion bzw. dem Mauerwerk 9. Nun kann eine gleichmäßig dicke Putzschicht aufgebracht werden.

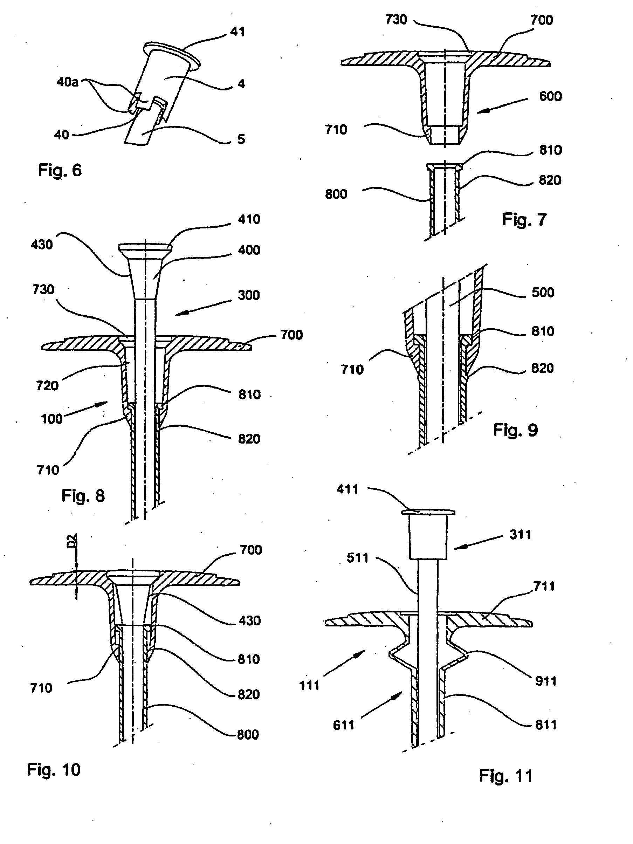

Fig. 5 zeigt einen Spreizelementkopf 4 mit Vorsprung 41 und einer in ihrem Umfang ununterbrochenen Schneidkante 40, sowie einen Teil des Spreizelementschafts 5. In Fig. 6 ist ein weiterer Spreizelementkopf 4 dargestellt, der allerdings eine in ihrem Umfang unterbrochene Schneidkante 40 aufweist. Dabei werden mehrere Schneidelemente 40a gebildet, die je nach Bedarf rechteckig, dreieckig oder sägezahnförmig ausgebildet sein können. Ob die Schneidkante 40 in ihrem Umfang ununterbrochen oder unterbrochen ausgestaltet ist, hängt letztlich von der Art und dem Material der zwischen dem Druckteller 7 und der Dübelhülse 8 gewählten Verbindung ab.

Ein alternativer erfindungsgemäßer Dübel 600 wird in Fig. 7 dargestellt. Der Dübel 600 weist einen Druckteller 700 mit einer Ausnehmung 730 und eine am in Einführrichtung unteren Ende des Drucktellers 700 angeordnete Rastvorrichtung 710 auf. Der Dübelschaft 800 ist getrennt von dem Druckteller 700 gezeigt und weist erste und zweite Rastelemente 810, 820 auf. Der Dübelschaft 800 kann dabei dergestalt in den Druckteller 700 eingesetzt werden, dass die am in Einführrichtung unteren Ende des Drucktellers 700 angeordnete Rastvorrichtung 710 zwischen den ersten und zweiten Rastelementen 810, 820 des Dübelschafts 800 einrastet, d.h. die korrespondierende Rastvorrichtung 710 und die ersten und zweiten Rastelemente 810, 820 wirken zusammen. Sie sind dabei so ausgebildet, dass beim Einbringen des Befestigungssystems 100 die Rastverbindung aufgehoben wird, wenn eine bestimmte Grenzkraft überschritten wird.

Fig. 8 zeigt den alternativen erfindungsgemäßen Dübel 600 im zusammengesetzten Zustand mit einem eingesteckten alternativen Spreizelement 300. Beide zusammen bilden somit ein alternatives erfindungsgemäßes Befestigungssystem 100. Der Spreizelementkopf 400 weist einen mit der Ausnehmung 730 korrespondierenden Vorsprung 410 auf und einen konischen Abschnitt 430. Im Druckteller 700 ist eine Aufnahme 720 zum Aufnehmen des Spreizelementkopfs 400 vorgesehen.

Fig. 9 zeigt vergrößert die Verbindung zwischen Druckteller 700 und Dübelschaft 800 und einen Teil des Spreizelementschafts 500. Das erste Rastmittel 810 am Dübelschaft 800 ist als umlaufender rechteckiger Vorsprung ausgebildet und das zweite Rastmittel 820 am Dübelschaft 800 als umlaufende Nase. Der rechteckige Vorsprung steht dabei weiter vom Dübelschaft 800 ab als die Nase. Die Nase kann an ihrer Spitze leicht abgerundet sein. Zwischen Nase 820 und Vorsprung 810 sitzt im unmontierten Zustand passgenau die umlaufende keilförmige Rastvorrichtung 710.

Während der Montage wird auch hier ein Bohrloch durch eine Dämmstoffplatte in eine Unterkonstruktion gebohrt (nicht gezeigt). Danach werden der Dübel 600 und das Spreizelement 300 in das Bohrloch eingesetzt. Anschließend wird das Spreizelement 300 mittels einer Eindreh- bzw. Einschlagvorrichtung in den Druckteller 700 und den Dübelschaft 800 eingetrieben. Die Verbindung zwischen dem Druckteller 700 und dem Dübelschaft 800 wird beispielsweise gelöst durch einen Schlag auf den vollständig in der Ausnehmung 730 bzw. der Aufnahme 720 aufgenommenen Spreizelementkopf 400. Eine solche axiale Kraftkomponente bewirkt, dass sich die am Druckteller 700 angeordnete keilförmige Rastvorrichtung 710 leicht nach außen bewegt, d.h. weg vom Dübelschaft 800, so dass sie über die abgerundete Nase 820 am Dübelschaft 800 gleiten kann und somit der Druckteller 700 axial entlang des Dübelschafts 800 gleitet. Die Bewegung des Drucktellers 700 entlang des Dübelschafts 800 wird gestoppt, wenn der konische Abschnitt 430 des Spreizelementkopfs 400 mit seinem in Einführrichtung unteren Ende in den Dübelschaft 800 gelangt (vgl. Fig. 10). Aufgrund des sich nach oben erweiternden Durchmessers des konischen Abschnitts 430 wird der Dübelschaft 800 sozusagen verstopft und damit eine weitere Bewegung des Drucktellers 700 blockiert. Eine Bewegung der Dübelhülse 800 im Bohrloch findet nicht mehr statt, da die regelmäßig vorhandene Spreizzone (nicht gezeigt) bereits für eine feste Verankerung im Mauerwerk sorgt. Auch in diesem Fall entspricht die Strecke, die der Druckteller 700 entlang des Dübelschafts 800 gleitet, in etwa der Dicke D2 des Drucktellers 700. Auf diese Weise wird wiederum sichergestellt, dass der Druckteller 700 bündig mit der Oberfläche einer Dämmstoffplatte abschließt und somit keine Dübelabzeichnungen im Putz entstehen können.

Fig. 11 zeigt ein Befestigungssystem 111 mit einem Spreizelement 311 und einem Dübel 611, wobei es sich nicht um eine Ausführungsform der Erfindung handelt. Das Spreizelement 311 umfasst einen Spreizelementkopf 411 sowie einen Spreizelementschaft 511. Der Dübel 611 weist einen Druckteller 711 und einen Dübelschaft 811 auf. Der Dübelschaft 811 weist an seinem dem Druckteller 711 zugewandten Ende einen in der Länge verkürzbaren Bereich 911 auf, dessen Länge beim Einbringen des Befestigungssystems 111 verkürzt wird, wenn eine bestimmte Grenzkraft überschritten wird. Beim Einbringen des Spreizelements 311 wird dieser Bereich 911 durch die vom Spreizelementkopf 411 auf den Druckteller 711 übertragene Kraft zusammengedrückt und nach außen gewölbt bzw. geknickt, so dass eine zusätzliche Verankerung im Dämmstoff entsteht. Der Druckteller 711 des Dübels 611 zieht dabei gerade so weit in die Dämmstoffplatte (nicht gezeigt) ein, dass er flächenbündig mit ihrer Oberfläche abschließt. Der Bereich 911 ist regelmäßig als Filmscharnier ausgebildet, über welches der Druckteller 711 fest mit dem Dübelschaft 811 verbunden ist.

## Patentansprüche

1. Befestigungssystem (1) zur Montage von Dämmstoffplatten (2) bestehend aus einem Spreizelement (3) mit einem Spreizelementkopf (4) und einem Spreizelementschaft (5) sowie einem Dübel (6) mit einem Druckteller (7) und einem daran anschließenden Dübelschaft (8),
**dadurch gekennzeichnet, dass**
an dem in Einführrichtung unteren Ende des Spreizelementkopfs (4) eine Schneidkante (40) zum Durchtrennen der Verbindung zwischen dem Druckteller (7) und dem Dübelschaft (8) derart angeordnet ist, dass beim vollständigen Einbringen des Spreizelements (3) in den Dübelschaft (8) die Verbindung zwischen dem Druckteller (7) und dem Dübelschaft (8) durchtrennt wird.

2. Befestigungssystem (1) gemäß Anspruch 1, **dadurch gekennzeichnet, dass** die Schneidkante (40) in ihrem Umfang ununterbrochen ausgebildet ist.

3. Befestigungssystem (1) gemäß Anspruch 1, **dadurch gekennzeichnet, dass** die Schneidkante (40) in ihrem Umfang unterbrochen ausgebildet ist.

4. Befestigungssystem (1) gemäß einem der Ansprüche 1 bis 3, **dadurch gekennzeichnet, dass** der Druckteller (7) und der Dübelschaft (8) über Sollbruchstellen miteinander verbunden sind.

5. Befestigungssystem (1) gemäß einem der vorhergehenden Ansprüche, **dadurch gekennzeichnet, dass** der Druckteller (7) axial entlang des Dübelschafts (8) verschiebbar ist.

6. Befestigungssystem (1) gemäß einem der vorhergehenden Ansprüche, **dadurch gekennzeichnet, dass** der Spreizelementkopf (4) an seinem in Einführrichtung oberen Ende einen Vorsprung (41) aufweist.

7. Befestigungssystem (1) gemäß Anspruch 6, **dadurch gekennzeichnet, dass** der Druckteller (7) eine Ausnehmung (73) aufweist, die mit dem Vorsprung (41) des Spreizelementkopfs (4) korrespondiert.

8. Befestigungssystem (1) gemäß einem der vorhergehenden Ansprüche, **dadurch gekennzeichnet, dass** der Dübelschaft (8) eine Spreizzone (80) aufweist.

9. Befestigungssystem (1) nach einem der vorhergehenden Ansprüche, **dadurch gekennzeichnet, dass** der Druckteller (7) und der Spreizelementkopf (4) in der Endmontageposition bündig mit der Oberfläche der Dämmstoffplatte (2) abschließen.

10. Befestigungssystem (1) gemäß einem der vorhergehenden Ansprüche, **dadurch gekennzeichnet, dass** der Dübelschaft (8) von einer Aussparung (42) zwischen der Schneidkante (40) und dem Spreizelementschaft (5) aufgenommen wird.

11. Befestigungssystem (1) nach einem der vorhergehenden Ansprüche, **dadurch gekennzeichnet, dass** das Spreizelement (3) als Spreiznagel ausgebildet ist.

12. Befestigungssystem (1) nach einem der vorhergehenden Ansprüche, **dadurch gekennzeichnet, dass** das Spreizelement (3) als Schraube ausgebildet ist.

13. Verfahren zur Montage einer Dämmstoffplatte (2) an einer Unterkonstruktion (9) mit Hilfe eines Spreizelements (3) mit einem Spreizelementkopf (4) und einem Spreizelementschaft (5) sowie eines Dübels (6) mit einem Druckteller (7) und einem daran anschließenden Dübelschaft (8), das mindestens die folgenden Schritte umfasst:
a) Bohren eines Bohrlochs (10) durch die Dämmstoffplatte (2) in die Unterkonstruktion (9),
b) Einsetzen des Dübels (6) und des Spreizelements (3) in das Bohrloch (10),
c) Eintreiben des Spreizelements (3) in den Druckteller (7) und den Dübelschaft (8), wobei
d) die Verbindung zwischen dem Druckteller (7) und dem Dübelschaft (8) mittels einer am in Einführrichtung unteren Ende des Spreizelementkopfs (4) angeordneten Schneidkante (40) durchtrennt wird, wobei
e) in der Endmontageposition der Druckteller (7) und der Spreizelementkopf (4) bündig mit der Oberfläche der Dämmstoffplatte (2) abschließen.

14. Befestigungssystem (100) zur Montage von Dämmstoffplatten bestehend aus einem Spreizelement (300) mit einem Spreizelementkopf (400) und einem Spreizelementschaft (500) sowie einem Dübel (600) mit einem Druckteller (700) und einem daran anschließenden Dübelschaft (800),
wobei an dem Dübelschaft (800) ein erstes und ein zweites Rastelement (810, 820) angeordnet sind, die mit einer korrespondierenden Rastvorrichtung (710) am unteren Ende des Drucktellers (700) dergestalt zusammenwirken und derart ausgebildet sind, dass beim Einbringen des Befestigungssystems (100) die Rastverbindung aufgehoben wird, wenn eine bestimmte Grenzkraft überschritten wird, **dadurch gekennzeichnet, dass** der Dübelschaft (800) so in den Druckteller (700) eingesetzt werden kann, dass die am in Einführrichtung unteren Ende des Drucktellers (700) angeordnete Rastvorrichtung (710) zwischen den ersten und zweiten Rastelementen (810, 820) des Dübelschafts (800) einrastet.

15. Befestigungssystem (100) gemäß Anspruch 14, **dadurch gekennzeichnet, dass** der Spreizelementkopf (400) einen konischen Abschnitt (430) aufweist.

16. Verfahren zur Montage einer Dämmstoffplatte an einer Unterkonstruktion mit Hilfe eines Spreizelements (300) mit einem Spreizelementkopf (400) und einem Spreizelementschaft (500) sowie eines Dübels (600) mit einem Druckteller (700) und einem daran anschließenden Dübelschaft (800), das mindestens die folgenden Schritte umfasst:
a) Bohren eines Bohrlochs durch die Dämmstoffplatte in die Unterkonstruktion,
b) Einsetzen des Dübels (600) und des Spreizelements (300) in das Bohrloch,
c) Eintreiben des Spreizelements (300) in den Druckteller (700) und den Dübelschaft (800), wobei
d) eine am Druckteller (700) und zwischen ersten und zweiten Rasteleinenten (810, 820) am Dübelschaft (800) angeordnete Rastvorrichtung (710) leicht nach außen bewegt wird, so dass sie über die zweiten Rastelemente (820) am Dübelschaft (800) gleiten kann, wobei
e) in der Endmontageposition der Druckteller (700) und der Spreizelementkopf (400) bündig mit der Oberfläche der Dämmstoffplatte abschließen.

## Claims

1. Fastening system (1) for the mounting of insulating panels (2) consisting of a spreading element (3) having a spreading element head (4) and a spreading element shaft (5) as well as of a dowel (6) having a pressing plate (7) and a dowel shaft (8) attached thereto,
**characterized in that**
at the lower end of the spreading element head (4) a cutting edge (40) for cutting through the connection between the pressing plate (7) and the dowel shaft (8) is arranged in insertion direction in such a way that during the full insertion of the spreading element (3) into the dowel shaft (8) the connection between the pressing plate (7) and the dowel shaft (8) is cut through.

2. Fastening system (1) according to claim 1, **characterized in that** the cutting edge (40) is formed uninterrupted in its circumference.

3. Fastening system (1) according to claim 1, **characterized in that** the cutting edge (40) is formed interrupted in its circumference.

4. Fastening system (1) according to one of the claims 1 to 3, **characterized in that** the pressing plate (7) and the dowel shaft (8) are connected to one another via determined breaking points.

5. Fastening system (1) according to one of the preceding claims, **characterized in that** the pressing plate (7) is axially displaceable along the dowel shaft (8).

6. Fastening system (1) according to one of the preceding claims, **characterized in that** the spreading element head (4) comprises at its upper end in insertion direction a projection (41).

7. Fastening system (1) according to claim 6, **characterized in that** the pressing plate (7) comprises a recess (73) which corresponds with the projection (41) of the spreading element head (4).

8. Fastening system (1) according to one of the preceding claims, **characterized in that** the dowel shaft (8) comprises a spreading zone (80).

9. Fastening system (1) according to one of the preceding claims, **characterized in that** the pressing plate (7) and the spreading element head (4) are flush with the surface of the insulating panel (2) in the final mounting position.

10. Fastening system (1) according to one of the preceding claims, **characterized in that** the dowel shaft (8) is received by a recess (42) between the cutting edge (40) and the spreading element shaft (5).

11. Fastening system (1) according to one of the preceding claims, **characterized in that** the spreading element (3) is formed as a spreading nail.

12. Fastening system (1) according to one of the preceding claims, **characterized in that** the spreading element (3) is formed as a screw.

13. A method for mounting an insulating panel (2) at a sub-construction (9) by means of a spreading element (3) having a spreading element head (4) and a spreading element shaft (5) as well as a dowel (6) having a pressing plate (7) and a dowel shaft (8) attached thereto, which at least comprises the following steps:
a) drilling a bore hole (10) through the insulating panel (2) into the sub-construction (9),
b) inserting the dowel (6) and the spreading element (3) into the bore hole (10),
c) driving in the spreading element (3) into the pressing plate (7) and into the dowel shaft (8) wherein
d) the connection between the pressing plate (7) and the dowel shaft (8) is cut through by means of a cutting edge (40) being arranged in insertion direction at the lower end of the spreading element head (4), wherein
e) in the final mounting position the pressing plate (7) and the spreading element head (4) are flush with the surface of the insulating panel (2).

14. Fastening system (100) for the mounting of insulating panels consisting of a spreading element (300) having a spreading element head (400) and a spreading element shaft (500) as well as of a dowel (600) having a pressing plate (700) and a dowel shaft (800) attached thereto,
wherein
at the dowel shaft (800) a first and a second latching element (810, 820) are arranged, which cooperate with a corresponding latching means (710) at the lower end of the pressing plate (700) in such a way and are formed in such a way that during insertion of the fastening system (100), the latching connection is suspended, if a predetermined boundary force is exceeded, **characterized in that** the dowel shaft (800) can be inserted into the pressing plate (700) in such a way that the latching means (710) being arranged in insertion direction at the lower end of the pressing plate (700) latches between the first and the second latching elements (810, 820) of the dowel shaft (800).

15. Fastening system (100) according to claim 14, **characterized in that** the spreading element head (400) comprises a conical section (430).

16. Method for mounting of an insulating panel at a sub-construction by means of a spreading element (300) having a spreading element head (400) and a spreading element shaft (500) as well as a dowel (600) having a pressing plate (700) and a dowel shaft (800) attached thereto which comprises at least the following steps:
a) drilling of a bore hole through the insulating panel into the sub-construction,
b) inserting of the dowel (600) and the spreading element (300) into the bore hole,
c) driving in the spreading element (300) into the pressing plate (700) and into the dowel shaft (800), wherein
d) a latching means (710) being arranged at the pressing plate (700) and between first and second latching elements (810, 820) at the dowel shaft (800) is moved slightly outwards such that the latter may slide over the second latching elements (820) at the dowel shaft (800), wherein
e) in the final mounting position the pressing plate (700) and the spreading element head (400) are flush with the surface of the insulating panel.

## Revendications

1. Système de fixation (1) pour la pose de panneaux isolants (2), constitué d'un élément d'expansion (3) comprenant une tête d'élément d'expansion (4) et une tige d'élément d'expansion (5) ainsi que d'une cheville (6) comprenant un plateau de pression (7) et, s'y raccordant, une tige de cheville (8), **caractérisé en ce qu'**à l'extrémité de la tête d'élément d'expansion (4) située en bas par rapport au sens d'introduction est disposée une arête de coupe (40) pour supprimer la liaison entre le plateau de pression (7) et la tige de cheville (8), de sorte que, lorsque l'élément d'expansion (3) est complètement enfoncé dans la tige de cheville (8), la liaison entre le plateau de pression (7) et la tige de cheville (8) est complètement supprimée.

2. Système de fixation (1) selon la revendication 1, **caractérisé en ce que** l'arête de coupe (40) est conformée de manière ininterrompue sur sa périphérie.

3. Système de fixation (1) selon la revendication 1, **caractérisé en ce que** l'arête de coupe (40) est conformée de manière interrompue sur sa périphérie.

4. Système de fixation (1) selon une des revendications 1 à 3, **caractérisé en ce que** le plateau de pression (7) et la tige de cheville (8) sont reliés entre eux par l'intermédiaire d'emplacements de rupture imposée.

5. Système de fixation (1) selon une des revendications précédentes, **caractérisé en ce que** le plateau de pression (7) est apte à coulisser axialement le long de la tige de cheville (8).

6. Système de fixation (1) selon une des revendications précédentes, **caractérisé en ce que** la tête d'élément d'expansion (4) comporte une saillie (41) à son extrémité située en haut par rapport au sens d'introduction.

7. Système de fixation (1) selon la revendication 6, **caractérisé en ce que** le plateau de pression (7) est pourvu d'un évidement (73) qui correspond avec la saillie (41) de la tête d'élément d'expansion (4).

8. Système de fixation (1) selon une des revendications précédentes, **caractérisé en ce que** la tige de cheville (8) comporte une zone d'expansion (80).

9. Système de fixation (1) selon une des revendications précédentes, **caractérisé en ce que**, dans la position de pose finale, le plateau de pression (7) et la tête d'élément d'expansion (4) se terminent au ras de la surface du panneau isolant (2).

10. Système de fixation (1) selon une des revendications précédentes, **caractérisé en ce que** la tige de cheville (8) est reçue par l'évidement (42) ménagé entre l'arête de coupe (40) et la tige d'élément d'expansion (5).

11. Système de fixation (1) selon une des revendications précédentes, **caractérisé en ce que** l'élément d'expansion (3) est conformé en clou d'expansion.

12. Système de fixation (1) selon une des revendications précédentes, **caractérisé en ce que** l'élément d'expansion (3) est conformé en vis.

13. Procédé pour la pose d'un panneau isolant (2) sur une construction porteuse (9) à l'aide d'un élément d'expansion (3) comprenant une tête d'élément d'expansion (4) et une tige d'élément d'expansion (5) ainsi que d'une cheville (6) comprenant un plateau de pression (7) et, s'y raccordant, une tige de cheville (8), ledit procédé comprenant au moins les étapes suivantes :
a) forage d'un trou foré (10) dans la construction porteuse (9) à travers le panneau isolant (2),
b) insertion de la cheville (6) et de l'élément d'expansion (3) dans le trou foré (10),
c) insertion de l'élément d'expansion (3) dans le plateau de pression (7) et dans la tige de cheville (8),
d) la liaison entre le plateau de pression (7) et la tige de cheville (8) est supprimée à l'aide d'une arête de coupe (40) disposée à l'extrémité de la tête d'élément d'expansion (4) située en bas par rapport au sens d'introduction,
e) dans la position de pose finale, le plateau de pression (7) et la tête d'élément d'expansion (4) se terminant au ras de la surface du panneau isolant (2).

14. Système de fixation (100) pour la pose de panneaux isolants constitué d'un élément d'expansion (300) comprenant une tête d'élément d'expansion (400) et une tige d'élément d'expansion (500) ainsi que d'une cheville (600) comprenant un plateau de pression (700) et, s'y raccordant, une tige de cheville (800), sur la tige de cheville (800) étant disposés un premier et un second élément encliquetable (810, 820), lesquels coopèrent avec un dispositif encliquetable correspondant (710) prévu à l'extrémité inférieure du plateau de pression (700) et sont conçus de façon que, lors de la mise en place du système de fixation (100), la liaison encliquetée soit supprimée lorsqu'une force limite déterminée est dépassée, **caractérisé en ce que** la tige de cheville (800) peut être insérée dans le plateau de pression (700) de manière que le dispositif encliquetable (710) disposé à l'extrémité du plateau de pression (700) située en bas par rapport au sens d'introduction s'encliquète entre les premier et second éléments encliquetables (810, 820) de la tige de cheville (800).

15. Système de fixation (100) selon la revendication 14, **caractérisé en ce que** la tête d'élément d'expansion (400) présente une portion conique (430).

16. Procédé pour la pose d'un panneau isolant sur une construction porteuse à l'aide d'un élément d'expansion (300) comprenant une tête d'élément d'expansion (400) et une tige d'élément d'expansion (500) ainsi que d'une cheville (600) comprenant un plateau de pression (700) et, s'y raccordant, une tige de cheville (800), ledit procédé comprenant au moins les étapes suivantes :
a) forage d'un trou foré dans la construction porteuse à travers le panneau isolant,
b) insertion de la cheville (600) et de l'élément d'expansion (300) dans le trou foré,
c) insertion de l'élément d'expansion (300) dans le plateau de pression (700) et dans la tige de cheville (800),
d) un dispositif encliquetable (710) disposé sur le plateau de pression (700) et entre des premier et second éléments encliquetables (810, 820) de la tige de cheville (800) pouvant être déplacé légèrement vers l'extérieur de façon à pouvoir glisser au-dessus des deux éléments encliquetables (820) de la tige de cheville (800),
e) dans la position de pose finale, le plateau de pression (700) et la tête d'élément d'expansion (400) se terminant au ras de la surface du panneau isolant.
